# EUROPÄISCHE PATENTSCHRIFT

(11) **EP 0 927 674 B1**
(45) Veröffentlichungstag und Bekanntmachung des Hinweises auf die Patenterteilung: **11.12.2002**
(21) Anmeldenummer: 97122980.2
(22) Anmeldetag: 30.12.1997
(51) Int. Cl.: B61L 25/02, G01B 7/00, G01D 5/14

(54) **Vorrichtung zur Positionsbestimmung eines an einer Schiene verfahrbaren Fahrzeugs**
Position detecting device of a vehicle moving along a rail
Dispositif pour détecter la position d'un véhicule, déplaçable le long d'un rail

(43) Veröffentlichungstag der Anmeldung: 07.07.1999
(73) Patentinhaber: Fahrleitungsbau GmbH, D-45329 Essen (DE)
(72) Erfinder: Strunk, Rolf, 41470 Neuss (DE)
(74) Vertreter: Masch, Karl Gerhard, Dr.

(56) Entgegenhaltungen:
- EP-A- 0 626 299
- DE-A- 3 200 811
- DE-A- 4 314 636

## Beschreibung

Die Erfindung betrifft eine Vorrichtung zur absoluten Positionsbestimmung eines an einer Schiene verfahrbaren Fahrzeugs, wobei längs der Schiene ein stationäres Magnetband vorgesehen ist, welches Magnetband quer zur Längsrichtung der Schiene verlaufende und in einem vorgegebenen Teilungsabstand längs der Schiene angeordnete Magnetisierungsbereiche aufweist, wobei ein dem Magnetband zugeordneter Lesekopf an dem Fahrzeug befestigt ist. - Die genaue Positionsbestimmung derartiger Fahrzeuge ist beispielsweise wichtig beim Positionieren der Fahrzeuge bzw. verfahrbaren Födereinrichtungen an Bearbeitungsstationen, Lastübergabestationen oder dergleichen. Erfindungsgemäß sind die Magnetisierungsbereiche des Magnetbandes in einer binären Absolutcodierung nach einem bestimmten Code angeordnet.

Bei der bekannten Vorrichtung der eingangs genannten Art, von der die Erfindung ausgeht (EP 0 626 299 A1) wird mit einem Lesekopf gearbeitet, der nur einen Sensor aufweist. Bei dieser bekannten Vorrichtung sind die Magnetisierungsbereiche des Magnetbandes in einer binären Absolutcodierung nach einem Faltungscode angeordnet. Die Vorrichtung hat sich grundsätzlich bewährt, ist jedoch im Hinblick auf die Genauigkeit der Positionsbestimmung verbesserungsfähig. Mit der bekannten Vorrichtung ist insbesondere eine eindeutige Positionsbestimmung nur möglich, wenn der Sensor des Lesekopfes einem bestimmten Magnetisierungsbereich zugeordnet werden kann bzw. einen bestimmten Magnetisierungsbereich unmittelbar erfaßt. An den Polübergängen der Magnetisierungsbereiche ist eine genaue Positionsbestimmung nicht möglich. Dies wirkt sich insbesondere deshalb nachteilhaft aus, weil sich das Magnetband nicht vollständig digital magnetisieren läßt, da sich benachbarte Magnetisierungsbereiche gegenseitig beeinflussen. Vor allem wenn Störungen, beispielsweise Verschmutzungen oder Unterbrechungen im Fahrweg des Lesekopfes auftreten, muß mit einer relativ ungenauen Positionsbestimmung mit dem nur einen Sensor gerechnet werden.

Demgegenüber liegt der Erfindung das technische Problem zugrunde, eine Vorrichtung der eingangs genannten Art anzugeben, mit der auf relativ einfache Weise eine sehr genaue absolute Positionsbestimmung des verfahrbaren Fahrzeuges über den gesamten Fahrweg möglich ist.

Zur Lösung dieses technischen Problems lehrt die Erfindung eine Vorrichtung der eingangs beschriebenen Art, welche dadurch gekennzeichnet ist, daß der Lesekopf eine Mehrzahl von mit einem vorgegebenen Teilungsabstand in Längsrichtung der Schiene angeordneten, magnetisch empfindlichen Sensoren aufweist und daß der Teilungsabstand der Sensoren kleiner ist als der Teilungsabstand der Magnetisierungsbereiche des Magnetbandes. Teilungsabstand der Magnetisierungsbereiche meint den Abstand der Mitten zweier benachbarter Magnetisierungsbereiche in Magnetbandlängsrichtung. Teilungsabstand der Sensoren meint den Abstand der Sensormitten zweier benachbarter Sensoren.

Die von den Sensoren aufgenommenen Signale werden zweckmäßigerweise von einer Signalaufbereitungsanlage aufbereitet. Der Erfindung liegt die Erkenntnis zugrunde, daß bei Einsatz mehrerer Sensoren in dem Lesekopf eine sehr genaue Positionsbestimmung möglich ist, wenn der Teilungsabstand der Magnetisierungsbereiche sich von dem Teilungsabstand der mehreren Sensoren unterscheidet. Wenn man ausgehend von der bekannten Vorrichtung der eingangs beschriebenen Art anstelle lediglich eines Sensors eine Mehrzahl von Sensoren einsetzen würde und im Lichte der bekannten Maßnahmen den Teilungsabstand der Sensoren entsprechend dem Teilungsabstand der Magnetisierungsbereiche einrichten würde, kann eine exakte Positionsbestimmung über den gesamten Fahrweg nicht gewährleistet werden. Eine genaue Position kann nur dann bestimmt werden bzw. ein bestimmtes Codewort steht nur dann zur Verfügung, wenn die mehreren Sensoren unmittelbar den Magnetisierungsbereichen zugeordnet sind bzw. sich unmittelbar gegenüber den Magnetisierungsbereichen befinden. Im Bereich der Polübergänge zwischen den Magnetisierungsbereichen ist jedoch eine genaue Positionsbestimmung nicht möglich. Wie bereits oben dargelegt ist dies insbesondere deshalb nachteilhaft, weil sich das Magnetband nicht vollständig digital magnetisieren läßt, da sich benachbarte Magnetbereiche gegenseitig störend beeinflussen. Der Erfindung liegt die Erkenntnis zugrunde, daß die geschilderten Nachteile überraschenderweise überwunden werden können, wenn der Teilungsabstand der Sensoren kleiner gewählt wird als der Teilungsabstand der Magnetisierungsbereiche. Mit der erfindungsgemäßen Lehre läßt sich noch ein weiterer Nachteil vermeiden, der bei der eingangs beschriebenen Vorrichtung mit nur einem Sensor im Lesekopf oder bei einem Lesekopf mit mehreren Sensoren im gleichen Teilungsabstand wie die Magnetisierungsbereiche, auftritt. Dieser Nachteil kommt dadurch zustande, daß nicht alle Bereiche des Lesekopfes stets einen konstanten Abstand zum Magnetband aufweisen. Insbesondere wenn auf der Schiene bzw. auf dem Magnetband Verschmutzungen vorhanden sind oder wenn in der Schiene bzw. im Magnetband Kurven vorgesehen sind, haben gegebenenfalls einzelne Bereiche des Lesekopfes bzw. die verschiedenen Sensoren unterschiedliche Abstände zum Magnetband. Mit zunehmender Entfernung des Lesekopfes bzw. der Sensoren vom Magnetband verändert sich jedoch das mit den Sensoren erfaßte Signal bzw. Frequenzspektrum in Amplitude und Frequenzverlauf. Dadurch läßt die Genauigkeit der absoluten Positionsbestimmung zu wünschen übrig. Weiter unten wird erläutert, wie im Rahmen der erfindungsgemäßen Maßnahmen diese nachteilhaften Effekte vermieden werden können.

Nach bevorzugter Ausführungsform der Erfindung besteht das Magnetband aus einem magnetisierbaren flexiblen Kunststoffprofil, d. h. einem Kunststoffband, dem ein magnetisierbares Metallpulver einverleibt ist. Das Kunststoffband ist vorzugsweise zu ca. 90 bis 95 Gew.-% mit einem permanentmagnetischen Pulver gefüllt. Das Kunststoffband wird zweckmäßigerweise als rechteckiges Profil extrudiert. Zunächst hat das Kunststoffband magnetisch anisotrope Eigenschaften, die vorzugsweise durch Hinterkleben mit einer Stahlfolie, die gleichzeitig als magnetischer Rückschluß dient, noch verstärkt werden können. - An dem Magnetband werden Magnetisierungsbereiche erzeugt, die in einer binären Absolutcodierung angeordnet sind. Diese Magnetisierung wird mit einem Magnetisierungswerkzeug zur einseitig mehrpoligen Magnetisierung pulvergefüllter Kunststoffprofile (DE-C-30 31 983) erzeugt. Auf dem Kunststoffband wird gleichsam ein digitales Pseudorauschen magnetisch aufgezeichnet. Somit enthält das Magnetband die Positionsinformation in Form einer codierten dualen Pseudozufallsfolge. - Nach einer Ausführungsform der Erfindung kann das Magnetband in einer stromführenden Schiene für das Fahrzeug integriert sein und beispielsweise auf der Rückseite einer Schleifleitung bzw. einer Schleiffläche für einen Stromabnehmer des Fahrzeuges angeordnet sein. Es liegt jedoch auch im Rahmen der Erfindung, daß das Magnetband separat neben der Schiene bzw. der stromführenden Schiene angeordnet ist. Vorzugsweise ist das Magnetband quer zur Schienenlängsrichtung nicht breiter als 20 mm. Nach einer bevorzugten Ausführungsform der Erfindung sind mehrere Magnetbänder parallel zu der Schiene angeordnet, um höhere Auflösungen zu erzielen und/oder sind mehrere Magnetbänder in Reihe hintereinander angeordnet, um relativ lange Fahrwege mit zugeordneten Meßstrecken zu erreichen. Zweckmäßigerweise wird der Lesekopf mit Spiel, d. h. berührungsfrei, beispielsweise mit einem Abstand von 2 mm über das Magnetband geführt. Es liegt jedoch auch im Rahmen der Erfindung, daß der Lesekopf die Schiene bzw. das Magnetband berühren kann. - Vorzugsweise beträgt der Teilungsabstand der Magnetisierungsbereiche ca. 4 mm.

Zweckmäßigerweise sind die Sensoren des Lesekopfes in Längsrichtung des Lesekopfes hintereinander in einer Reihe angeordnet. Es liegt im Rahmen der Erfindung, daß die Sensoren des Lesekopfes Hallsensoren sind. Vorzugsweise ist die Breite des Lesekopfes quer zur Schienenlängsrichtung geringer als 20 mm. Die Länge des Lesekopfes in Schienenlängsrichtung beträgt zweckmäßigerweise weniger als 80 mm. Bei einem Teilungsabstand der Magnetisierungsbereiche von 4 mm beträgt der Teilungsabstand der Sensoren des Lesekopfes vorzugsweise weniger als 3,5 mm. Zweckmäßigerweise beträgt der Teilungsabstand der Sensoren in diesem Fall zwischen 2,8 mm und 3 mm. Vorzugsweise weist der Lesekopf 24 Sensoren auf.

Nach bevorzugter Ausführungsform der Erfindung weisen die Sensoren jeweils einen zugeordneten elektronischen Auswertungsbaustein in dem Lesekopf auf. Die von den Sensoren aufgenommenen und ausgewerteten Meßsignale werden einer Signalaufbereitungseinrichtung zugeführt, die ein Frequenzspektrum ausgleicht und einem nachfolgenden Decodierverfahren zuführt.

Der Lesekopf weist zweckmäßigerweise einen relativ geringen Abstand zum Magnetband, beispielsweise 2 mm, auf. Wenn beispielsweise Verschmutzungen in der Schiene oder auf dem Magnetband vorhanden sind, kann der Lesekopf bereichsweise einen vom Sollabstand abweichenden Abstand zum Magnetband aufweisen. In Schienenkurven weisen die Sensoren in der Lesekopfmitte einerseits und an der Lesekopfstirnseite bzw. Lesekopfrückseite andererseits unterschiedliche Abstände zu dem Magnetband auf. Mit zunehmendem Abstand der Sensoren vom Magnetband verändert sich aber das Frequenzspektrum im Hinblick auf Frequenzverlauf und Amplitude in der Regel deutlich. Mit der erfindungsgemäßen Vorrichtung ist es nichtsdestoweniger möglich, aus dem Frequenzspektrum auf einfache und funktionssichere Weise die absolute Position des Fahrzeuges zu bestimmen. Hierzu lehrt die Erfindung, daß das bei verändertem Abstand der Sensoren vom Magnetband von einer Signalaufbereitungseinrichtung aufgenommene Frequenzspektrum mit einer Korrektureinrichtung korrigierbar ist. Veränderter Abstand der Sensoren vom Magnetband meint hierbei Abstände, die sich von dem eingestellten Sollabstand des Lesekopfes vom Magnetband unterscheiden. Vorzugsweise wird im Rahmen der Korrektur die Amplitude des Frequenzspektrums mit einer automatischen Verstärkungsregelung (automatic gain control, AGC) verändert. Dabei können auch Änderungen des Frequenzspektrums aufgrund von Temperaturschwankungen kompensiert werden. Das mit der AGC veränderte Frequenzspektrum wird anschließend vorzugsweise mit einem Equalizer entzerrt, wobei mit dem Equalizer die linearen Verzerrungen des Frequenzspektrums ausgeglichen werden. Im Ergebnis kann durch Auswertung des auf diese Weise korrigierten Frequenzspektrums die absolute Position des Fahrzeuges genau und funktionssicher bestimmt werden.

Die erfindungsgemäße Vorrichtung zeichnet sich durch den beachtlichen Vorteil aus, daß die absolute Ist-Position des Fahrzeuges jederzeit und unabhängig von der momentanen Position des Lesekopfes ermittelt werden kann. Aufgrund der erfindungsgemäßen unterschiedlichen Teilung der Magnetisierungsbereiche einerseits und der Sensoren des Lesekopfes andererseits kann die absolute Position unabhängig von der jeweiligen Zuordnung der Sensoren zu den Magnetisierungsbereichen bestimmt werden. Auch bei veränderlichem Abstand der Sensoren zum Magnetband aufgrund von Verschmutzungen auf dem Magnetband oder aufgrund von Kurven ist eine sehr genaue Positionsbestimmung des Fahrzeuges auf relativ einfache Weise möglich.

Nachfolgend wird die Erfindung anhand einer lediglich ein Ausführungsbeispiel darstellenden Zeichnung näher erläutert. Es zeigen in schematischer Darstellung:
- Fig. 1: die erfindungsgemäße Vorrichtung mit Magnetband und Lesekopf,
- Fig. 2: die Korrektur des Frequenzspektrums bei verändertem Abstand des Lesekopfes vom Magnetband.

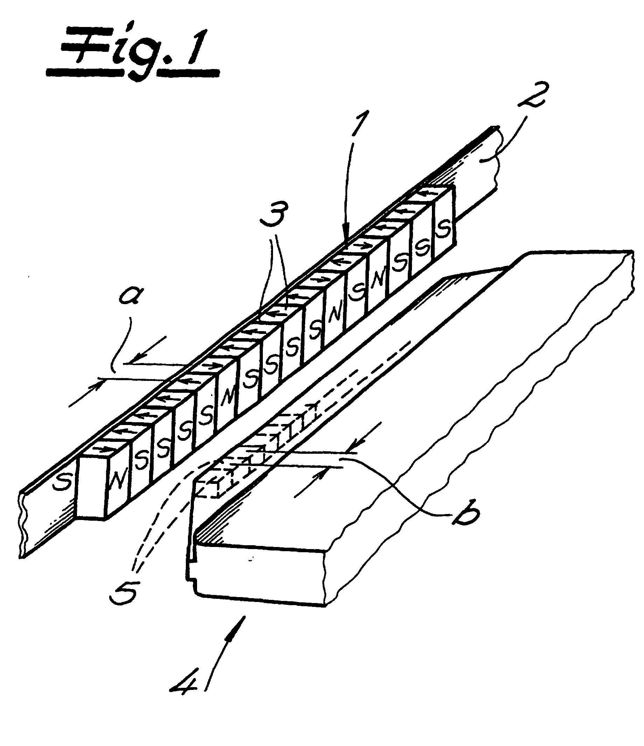

Fig. 1 zeigt eine Vorrichtung zur Positionsbestimmung eines an einer Schiene verfahrbaren Fahrzeugs. Längs der nicht dargestellten Schiene ist ein stationäres Magnetband 1 vorgesehen. Im Ausführungsbeispiel nach Fig. 1 ist das Magnetband 1 mit einem Stahlband 2 hinterlegt. Das Magnetband 1 weist quer zur Längsrichtung des Magnetbandes 1 verlaufende und in einem vorgegebenen Teilungsabstand a angeordnete Magnetisierungsbereiche 3 auf. Die Magnetisierungsbereiche 3 des Magnetbandes 1 sind in einer binären Absolutcodierung angeordnet und mit Hilfe eines entsprechenden nicht dargestellten Magnetisierungswerkzeuges erzeugt worden. In Fig. 1 sind die Polrichtungen der Magnetisierungsbereiche durch Pfeile angedeutet worden und sind die dem Lesekopf 4 zugeordneten Pole mit N bzw. S gekennzeichnet. Die Magnetisierungsbereiche 3 sind im Ausführungsbeispiel nach Fig. 1 in einem Teilungsabstand a angeordnet, der 4 mm beträgt.

Dem Magnetband 1 ist der Lesekopf 4 zugeordnet, der an dem nicht dargestellten Fahrzeug befestigt ist. Der Lesekopf 4 weist eine Mehrzahl von mit vorgegebenem Teilungsabstand in Längsrichtung des Lesekopfes angeordneten Sensoren 5 auf. Erfindungsgemäß ist der Teilungsabstand b der Sensoren 5 kleiner als der Teilungsabstand a der Magnetisierungsbereiche 3 des Magnetbandes 1. Der Teilungsabstand b soll im Ausführungsbeispiel nach Fig. 1 vorzugsweise 3 mm betragen. Im Ausführungsbeispiel nach Fig. 1 sind 24 Sensoren 5 im Lesekopf 4 angeordnet.

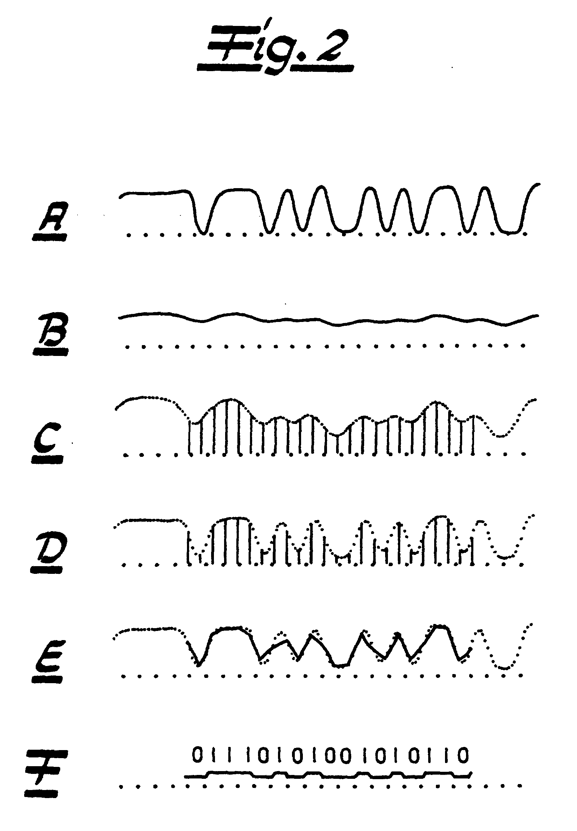

In Fig. 2 ist schematisch die Korrektur eines Frequenzspektrums dargestellt, welches Frequenzspektrum bei verändertem Abstand der Sensoren 5 vom Magnetband 1 aufgenommen wurde. Die in den Teilfiguren A bis F unter dem Frequenzspektrum dargestellten Punkte deuten den Teilungsabstand a der Magnetisierungsbereiche 3 an. Teilfigur A zeigt ein Frequenzspektrum, bei dessen Messung der Abstand des Lesekopfes zum Magnetband Null betrug. Teilfigur B zeigt dagegen ein Frequenzspektrum für einen Abstand von 4,5 mm zwischen Lesekopf 4 und Magnetband 1. Im Vergleich zur Teilfigur A haben sich der Frequenzverlauf und die Amplitude deutlich verändert. Die Teilfiguren C bis F zeigen die Korrektur bzw. die Aufbereitung des Frequenzspektrums gemäß Teilfigur B. In Teilfigur C wurde das Frequenzspektrum mit einer automatischen Verstärkungsregelung (automatic gain control AGC) analog aufbereitet. Die senkrechten Linien deuten den Teilungsabstand der Sensoren 5 des Lesekopfes 4 an. In Teilfigur D wurde das Spektrum gemäß Teilfigur C mit einem Equalizer entzerrt. Anschließend wird eine lineare Interpolation durchgeführt, die in Teilfigur E dargestellt ist. Daraufhin folgt eine Demodulation des Spektrums, deren Ergebnis die Teilfigur F zeigt. Aus dem auf diese Weise aufbereiteten Frequenzspektrum läßt sich problemlos die Absolutposition des Fahrzeugs bestimmen.

## Patentansprüche

1. Vorrichtung zur absoluten Positionsbestimmung eines an einer Schiene verfahrbaren Fahrzeugs,
wobei längs der Schiene ein stationäres Magnetband (1) vorgesehen ist, welches Magnetband (1) quer zur Längsrichtung der Schiene verlaufende und in einem vorgegebenen Teilungsabstand a längs der Schiene angeordnete Magnetisierungsbereiche (3) aufweist,
wobei ein dem Magnetband (1) zugeordneter Lesekopf (4) an dem Fahrzeug befestigt ist, **dadurch gekennzeichnet,**
**dass** der Lesekopf (4) eine Mehrzahl von mit einem vorgegebenen Teilungsabstand b in Längsrichtung der Schiene angeordneten Sensoren (5) aufweist und dass die Sensoren (5) des Lesekopfes (4) magnetisch empfindliche Sensoren sind
und **dass** der Teilungsabstand b der Sensoren (5) kleiner ist als der Teilungsabstand a der Magnetisierungsbereiche (3) des Magnetbandes (1).

2. Vorrichtung nach Anspruch 1, **dadurch gekennzeichnet, dass** das Magnetband (1) aus einem magnetisierbaren flexiblen Kunststoffprofil besteht.

3. Vorrichtung nach einem der Ansprüche 1 oder 2, **dadurch gekennzeichnet, dass** bei verändertem Abstand der Sensoren (5) vom Magnetband (1) das von einer Signalaufbereitungseinrichtung aufgenommene Frequenzspektrum mit einer Korrektureinrichtung korrigierbar ist.

## Claims

1. An apparatus for determining the absolute position of a vehicle which can travel on a rail,
wherein a stationary magnetic strip (1) is provided along the rail, which magnetic strip (1) comprises regions of magnetisation (3) which extend transversely to the longitudinal direction of the rail and which are disposed at a predetermined separating pitch a along the rail,
wherein a read head (4) which is associated with the magnetic strip (1) is fixed to the vehicle, **characterised in that**
the read head (4) comprises a multiplicity of sensors (5) disposed at a predetermined separating pitch b in the longitudinal direction of the rail, and that the sensors (5) of the read head (4) are magnetically sensitive sensors,
and that the separating pitch b of the sensors (5) is less than the separating pitch a of the regions of magnetisation (3) of the magnetic strip (1).

2. An apparatus according to claim 1, **characterised in that** the magnetic strip (1) consists of a magnetisable, flexible plastics section.

3. An apparatus according to either one of claims 1 or 2, **characterised in that** if the distance of the sensors (5) from the magnetic strip (1) is altered the frequency spectrum recorded by a signal processing device can be corrected by a correction device.

## Revendications

1. Dispositif pour déterminer de manière absolue la position d'un véhicule déplaçable sur un rail,
dans lequel le long du rail est prévue une bande magnétique (1) fixe, laquelle bande magnétique (1) comporte des zones de magnétisation (3) s'étendant transversalement à la direction longitudinale du rail et disposées selon un pas prédéfini a le long du rail,
dans lequel une tête de lecture (4), associée à la bande magnétique (1), est fixée au véhicule, **caractérisé**
**en ce que** la tête de lecture (4) comporte une pluralité de capteurs (5) disposés selon un pas prédéfini b, dans la direction longitudinale du rail, et en ce que les capteurs (5) de la tête de lecture (4) sont des capteurs sensibles magnétiquement
et **en ce que** le pas b des capteurs (5) est inférieur au pas a des zones de magnétisation (3) de la bande magnétique (1).

2. Dispositif selon la revendication 1, **caractérisé en ce que** la bande magnétique (1) est constituée d'un profilé en matière plastique flexible magnétisable.

3. Dispositif selon l'une des revendications 1 ou 2, **caractérisé en ce que** dans le cas où la distance des capteurs (5) par rapport à la bande magnétique (1) varie, le spectre de fréquence reçu par un dispositif de traitement de signaux peut être corrigé au moyen d'un dispositif de correction.
